# EUROPEAN PATENT SPECIFICATION

(11) **EP 1 697 453 B1**
(45) Date of publication and mention of the grant of the patent: **13.05.2009**
(21) Application number: 04802129.9
(22) Date of filing: 24.12.2004
(51) Int. Cl.: C08K 5/01, D01F 1/10, D01F 6/46

(54) **POLYMERIC PLASTICS MATERIAL AND MANUFACTURE THEREOF**
POLYMERES KUNSTSTOFFMATERIAL UND HERSTELLUNGSVERFAHREN DAFÜR
MATIERE PLASTIQUE POLYMERE ET SON PROCEDE DE PRODUCTION

(30) Priority: 24.12.2003 AU 2003907190
(43) Date of publication of application: 06.09.2006
(73) Proprietor: Gale Pacific Limited, Braeside, Victoria 3195 (AU)
(72) Inventor: NASARCZYK, Andrew, Braeside, Victoria 3195 (AU)
(74) Representative: Rambelli, Paolo
(86) International application number: PCT/AU2004/001828
(87) International publication number: WO 2005/061604

(56) References cited:
- EP-A2- 0 304 124
- GB-A- 1 194 704
- GB-A- 1 194 704
- GB-A- 2 242 390
- GB-A- 2 242 390
- US-A- 4 545 950
- US-A- 5 416 153
- US-A- 5 925 697
- US-A1- 2002 156 172
- PATENT ABSTRACTS OF JAPAN & JP 63 050 516 A (ASAHI CHEM IND CO LTD) 03 March 1988
- PATENT ABSTRACTS OF JAPAN & JP 62 275 152 A (TORAY IND INC) 30 November 1987

## Description

### BACKGROUND TO THE INVENTION

### Field of the Invention

This invention relates to a polymeric plastics material as well as the manufacture thereof. The material is applicable as a filament, fibre and fabric for general commercial and industrial uses, including covers, curtains, blinds, signage and tarpaulins exposed to environmental elements including moisture, and it will be convenient to hereinafter disclose the invention in relation to those exemplary applications. However, it is to be appreciated that the invention is not limited to those applications.

### Description of the Prior Art

The following discussion of the background to the invention is intended to facilitate an understanding of the invention. However, it should be appreciated that the discussion is not an acknowledgement or admission that any of the material referred to was published, known or part of the common general knowledge as at the priority date of the application.

One previous general purpose covering fabric has a material base woven from polypropylene fibres, with a polypropylene coating applied to each side of the base in order to provide the fabric with various characteristics including a liquid barrier and surfaces for printing. The fibres for the fabric are composed of a multiple of extruded and twisted filaments.

One problem with this fabric is a propensity for the material base to rapidly absorb moisture, such as water, through capillary action. That action is enhanced by a coating of a polyglycerolfattyester surfactant applied to the filaments following their extrusion in order to facilitate subsequent processing into fibres. The surfactant has the effect of lowering the surface tension of the filaments and thereby assisting moisture absorption.

Moisture absorption typically occurs at cut edges of the fabric, and at any flaws or disruptions in the integrity of the surface coating, and moisture access to even very small portions of the material base can lead to rapid and significant penetration of moisture through the material base. That moisture absorption sometimes entrains particles of dirt and other impurities, leading to staining of the base as well as initiating bacterial growth within the material base. As a result, the fabric is rendered unsightly and eventually leads to deterioration of the fabric.

In addition, the moisture absorption adds considerably to the weight of the fabric. As a consequence, when used in a hung or suspended application, more robust fittings are required to ensure proper support of the fabric. In any event, the wet fabrics can be heavier and more difficult to handle.

### SUMMARY OF THE INVENTION

It is an object of the present invention to provide a polymeric plastics material which has a reduced propensity to absorb moisture such as water.

It is a further object of the present invention to provide a method of manufacturing an improved polymeric plastics material.

With those objects in mind, the present invention in one broad aspect provides a polymeric plastics material having a reduced propensity to absorb moisture, the plastics material including:
a base polymeric composition including a wax between 0.5 and 5% by weight of the composition; and
a surface coating of an oil lubricant between 0.5 and 5% by volume of the material.
In one specific aspect of the present invention the above polymeric plastics material is in filamentary form.
In another specific aspect, the present invention provides a fibre manufactured from a multitude of filaments.

In a further broad aspect, the present invention provides A method of manufacturing a polymeric plastics material having a reduced propensity to absorb moisture, including the steps of:
preparing a polymeric plastics composition including a base polymeric composition and a wax in an amount between 0.5 and 5% by weight of the composition;
forming the composition into a material; and
lubricating a surface of the formed material with an oil lubricant in an amount between 0.5 and 5% by volume of the material.

In another specific aspect, the present invention provides a method of manufacturing a polymeric plastics material including : preparing a polymeric plastics composition including a wax; forming the composition into a material; and, lubricating the formed material, wherein the material has a reduced propensity to absorb moisture.

In still other aspects, the present invention provides a filament and fibre when manufactured according to the above methods.

Preferably, the wax is at a surface of the material. That is preferably achieved by allowing the wax to migrate to the surface as the composition is formed into the material. In at least one preferred form, the wax is intermittently distributed over the material surface.

Preferably, the wax is present in an amount which at least substantially prevents the material from absorbing moisture by capillary action. In at least one preferred form the amount of wax is between 0.5 and 5% by weight of the material and more preferably about1 % by weight.

Preferably, the wax is a hydrocarbon compound or mixture. In at least one preferred form, the compound or mixture is selected from one or more of the Fischer-Tropsch range of hydrocarbons.

Preferably, the plastics material includes a lubricant on the surface of the material. The lubricant is preferably applied to the material surface following material formation.

Preferably, the lubricant is present in an amount of between 0.5 and 5% by volume of the material, and more preferably about 2% by volume.

The lubricant is preferably an oil present as a film on the surface of the material.

Preferably, the composition includes a polymer or copolymer of propylene.

Preparing the composition preferably includes preparing a polypropylene master batch and adding a hydrocarbon compound or mixture wax to the master batch. The prepared composition is preferably extruded to form the material. That extrusion preferably forms filamentary material.

### DETAILED DESCRIPTION OF A PREFERRED EMBODIMENT OF THE INVENTION

In at least one preferred embodiment, the polymeric plastics material of the present invention has a composition which includes a polymer or copolymer of propylene. However, it should be appreciated that, depending on the intended application of the material other polymers and co-polymers may be suitable, for example polyamides including nylon, and polyesters.

In this embodiment, the wax in the composition is a hydrocarbon compound or mixture selected from the Fischer-Tropsch range of hydrocarbons. Those hydrocarbons particularly suitable for use with polypropylene in the manufacture of the material and filament are sold by Sasol under the product name of AdSperse. One preferred product is known as AdSperse 868. That product was specifically developed for use as a dispersing aid in the manufacture of polyolefin masterbatches and colour concentrates.

The polymeric plastics composition is prepared as a master batch prior to formation into the material. The wax is then added to the polypropylene master batch. The wax is included in an amount of about 2% by volume of the composition.

In the preferred embodiment, formation of the polymeric plastics composition into the material causes the wax to migrate to the surface of the material, where it may be intermittently distributed over the material surface. The wax is preferably distributed in globules over the material surface in an amount of about 1 % by weight of the material.

In this embodiment, the polymeric plastics material is formed by extrusion of the master batch into filaments. That extrusion occurs in any manner well known to those skilled in the relevant art. Typically, the composition is extruded through a multifilament die to simultaneously produce between about 120 and 130 filaments for subsequent formation into fibres.

In the preferred embodiment, the polymeric plastics material is lubricated immediately after formation. Thus, in this embodiment, the filaments are lubricated immediately after extrusion through the multifilament die. Lubrication is achieved by passing the extruded filaments through a lubricant so that the lubricant is applied to the surfaces thereof.

The lubricant is in a liquid state, and is presented to the extruded filament in drop form. Thus, the extruded filaments pass through the lubricant drops so as to coat the surfaces thereof with a thin film of lubricant.

In the preferred embodiment, the lubricant is applied to the material in an amount of about 2% by volume of filament.

The lubricant may be of any suitable composition having regard to the intended application of the material. In the exemplary application of the polymeric plastics filaments, the lubricant has characteristics which include transparency so as to not impact on the appearance of the filaments. In addition, the lubricant should not interfere with subsequent processing of the filaments, including twisting into fibres and weaving into fabric, and any subsequent treatment of the fabric such as coating. Preferably, the lubricant facilitates formation of the filaments into fibres by holding the filaments together, and acting as an anti-static agent during subsequent heating, stretching and twisting into fibres.

In this embodiment, the lubricant is a high viscosity hydrocarbon white oil. One such suitable oil is sold by Exxon-Mobil Corporation under the product identifier N172.

In this preferred embodiment, the lubricant may include an antistatic agent added to the oil in order to reduce static electricity between the extruded filaments during subsequent processing.

The polymeric plastics material, particularly in the form of filaments and fibres, may be manufactured using any suitable equipment including conventional equipment used to manufacture current polypropylene filaments and fibres. That equipment can be operated using the same parameters as in the known manufacturing techniques. Fabric manufactured from filaments and fibres composed of the polymeric plastics material of the present invention, can be coated in a similar manner to the previously coated woven polypropylene material base.

The polymeric plastics material of the present invention has a reduced propensity to absorb moisture, such as water, through capillary action. The reason for that resistance to absorb moisture is not entirely understood. However, it is believed that in part, the wax globules distributed over the surface of the material act as barriers to the capillary flow of water there along. The inhibited water flow tends to accumulate at the globules into water droplets which eventually overcome surface tension between the droplets and material, and fall away under their own weight.

### Example

In order to further understand the present invention, an Example material will now be described.

A master batch was prepared having the following approximate composition:
10% UV stabiliser
40% AdSperse wax
50% Polypropylene carrier

The master batch was added to polypropylene at the rate of about 4.5% and the composition thoroughly mixed. In particular, the mixing distributed the wax throughout the composition.

The mixed composition was then extruded through a multi-filament die to simultaneously produce about 120 filaments.

Downstream of the dye the filaments were passed through a hydrocarbon white oil N172 of Exxon-Mobil Corporation so as to film coat the filaments with the oil.

The filaments were then twisted into a multi filament fibre which is wound into a skein or roll for subsequent use.

In one test, polypropylene fibres manufactured according to the above Example were compared with known polypropylene fibres to quantify their resistance to moisture absorption, particularly atmospheric moisture absorption by capillary action. That test involved suspending lengths of both polypropylene fibres types above a container of tap water, with the ends of the fibres dipping into the water. The fibres were of the same nominal sizes, and the test was conducted in ambient conditions. It was observed that the water was absorbed by capillary action or wicked along the known fibres at a rate of about 1cm per minute. That absorption continued along the entire length of the fibres. In contrast, the water wicked along the fibres according to the present invention for about 1 cm above the surface of the water over a longer period of time, and then stopped. That is, the water did not continue to wick along the fibres.

In a further test, a 1.5 metre square piece of fabric woven from fibres manufacture according to the above Example was supported horizontally. A hole approximately 50mm was cut in the centre of the fabric piece, and water was applied through a tube at a rate of about 5 litres/minute to the edge of the fabric defining the hole. The water was supplied to the tube from a small tank. Again, the test was conducted in ambient conditions.

Initially, water with a zero pressure head was applied to the fabric for as period of 24 hours. No absorption into the fabric surrounding the hole was observed. The fabric displayed a distinct hydrophobic nature.

The water tank was then raised above the fabric piece so as to apply the water at a pressure head of 1 foot. At that pressure head it was observed that the water was absorbed by capillary action into the fabric piece at a rate of about 0.01 litres/minute.

By way of comparison, the same text was conducted with a 1.5 metre square piece of fabric woven from known polypropylene fibres. With a zero pressure head, water was absorbed by the fabric at a rate of about 0.05 litres/minute, whilst at a 1 foot pressure head the absorption rate increased to about 0.1 litres/minute.

The oil lubricant produces a material surface tension which is higher than exhibited by the unlubricated material, and thus reduces the capillary action between the material and water.

The material of the present invention is suitable for a wide range of uses and applications. Because of the reduced moisture absorption capabilities, fibres composed of the material, and woven or knitted into a fabric, will be more suitable for external and exposed environments. In particular, the fabric will be less prone to staining and bacterial attack, and will also be easier to handle in such environments.

Finally, it is to be understood that various alterations, modifications and/or additions may be made to the material and its manufacture, without departing from the ambit of the present invention as defined in the claims appended hereto.

## Claims

1. A polymeric multifilament fibre formed from a multitude of filaments, the fibre having a plurality of capillaries, **characterised in that** each fibre comprises:
a base polymeric composition comprising a mixture of a polymer, copolymer or combination thereof of propylene and a wax in an amount between 0.5 and 5% by weight of the composition; and
a surface coating of an oil lubricant in an amount between 0.5 and 5% by volume of the filaments,
wherein the combination of the wax and oil lubricant substantially prevents the fibre from absorbing moisture by capillary action.

2. A polymeric multifilament fibre as claimed in claim 1, **characterised in that** the wax is present in an amount of about 1 % by weight of the composition.

3. A polymeric multifilament fibre as claimed in claim 1 or 2, **characterised in that** the oil lubricant is present in an amount of about 2% by volume of the filaments.

4. A polymeric multifilament fibre as claimed in any preceding claim, **characterised in that** the wax is at a surface of each filament.

5. A polymeric multifilament fibre as claimed in any preceding claim, **characterised in that** the wax is intermittently distributed over a surface of each filament.

6. A polymeric multifilament fibre as claimed in any preceding claim, **characterised in that** the wax is distributed in globules over a surface of each filament.

7. A polymeric multifilament fibre as claimed in any preceding claim, **characterised in that** the wax is a hydrocarbon compound or mixture selected from one or more of the Fischer-Tropsch range of hydrocarbons.

8. A polymeric multifilament fibre as claimed in any preceding claim, **characterised in that** the wax is Ad Sperse 868.

9. A polymeric multifilament fibre as claimed in any preceding claim, **characterised in that** the oil lubricant is present as a film on the surface of each filament.

10. A polymeric multifilament fibre as claimed in any preceding claim, **characterised in that** the oil lubricant is a hydrocarbon white oil.

11. A fabric **characterised in that** the fabric is manufactured from a multitude of fibres as claimed in claims 1 to 10.

12. A method of manufacturing polymeric multifilament fibre, the material having a plurality of capillaries, the method comprising the steps of:
preparing a polymeric plastics composition comprising a mixture of a polymer, copolymer or combination thereof of propylene and a wax;
forming the composition into two or more filaments;
lubricating a surface of the filaments with an oil lubricant ; and
forming the filaments into a multifilament fibre,
**characterised in that** the polymeric plastics composition includes wax in an amount between 0.5 and 5% by weight of the composition and the oil lubricant is added to the surface of the filaments an amount between 0.5 and 5% by volume of the filaments such that the combination of the wax and oil lubricant substantially prevents the fibre from absorbing moisture by capillary action.

13. A method as claimed in claim 12, **characterised in that** the wax is added to the composition in an amount of about 2% by volume of the composition.

14. A method as claimed in claim 12 or 13, **characterised in that** the lubricant is applied in an amount of about 2% by volume of the filaments.

15. A method as claimed in any one of claims 12 to 14, **characterised in that** forming the composition into a material comprises allowing the wax to migrate to a surface of the filaments.

16. A method as claimed in claim 15, **characterised in that** the wax is intermittently distributed over the surface of the filaments.

17. A method as claimed in any one of claims 12 to 16, **characterised in that** the wax is distributed in globules over the surface of the filaments.

18. A method as claimed in any one of claims 12 to 17, **characterised in that** the filaments are formed by extrusion of the composition.

19. A method as claimed in any one of claims 12 to 18, **characterised in that** lubricating the formed filaments comprises applying a hydrocarbon white oil to a surface of the material.

20. A method as claimed in any one of claims 12 to 19, **characterised in that** the oil lubricant is applied by passing the filaments through lubricant drops so as to form a film of lubricant on surfaces of the filaments.

## Patentansprüche

1. Polymere Multifilamentfaser, die aus mehreren Filamenten gebildet ist, wobei die Faser mehrere Kapillaren aufweist, **dadurch gekennzeichnet, dass** jede Faser umfasst:
eine Basispolymerzusammensetzung, umfassend ein Gemisch aus einem Polymer, einem Copolymer oder einer Kombination davon aus Propylen und einem Wachs in einer Menge zwischen 0,5 und 5 Gewichtsprozent der Zusammensetzung; und
eine Oberflächenbeschichtung aus einem Schmieröl in einer Menge zwischen 0,5 und 5 Volumenprozent der Filamente,
wobei die Kombination des Wachses und des Schmieröls im Wesentlichen verhindert, dass die Faser Feuchtigkeit durch Kapillarwirkung absorbiert.

2. Polymere Multifilamentfaser nach Anspruch 1, **dadurch gekennzeichnet, dass** das Wachs in einer Menge von etwa 1 Gewichtsprozent der Zusammensetzung vorhanden ist.

3. Polymere Multifilamentfaser nach Anspruch 1 oder 2, **dadurch gekennzeichnet, dass** das Schmieröl in einer Menge von etwa 2 Volumenprozent der Filamente vorhanden ist.

4. Polymere Multifilamentfaser nach einem der vorangehenden Ansprüche, **dadurch gekennzeichnet, dass** sich das Wachs an einer Oberfläche jedes Filaments befindet.

5. Polymere Multifilamentfaser nach einem der vorangehenden Ansprüche, **dadurch gekennzeichnet, dass** das Wachs diskontinuierlich über eine Oberfläche jedes Filaments verteilt ist.

6. Polymere Multifilamentfaser nach einem der vorangehenden Ansprüche, **dadurch gekennzeichnet, dass** das Wachs in Kügelchen über eine Oberfläche jedes Filaments verteilt ist.

7. Polymere Multifilamentfaser nach einem der vorangehenden Ansprüche, **dadurch gekennzeichnet, dass** das Wachs eine Kohlenwasserstoffverbindung oder ein Gemisch ist, ausgewählt aus einem oder mehreren Kohlenwasserstoffen des Fischer-Tropsch-Bereichs.

8. Polymere Multifilamentfaser nach einem der vorangehenden Ansprüche, **dadurch gekennzeichnet, dass** das Wachs Ad Sperse 868 ist.

9. Polymere Multifilamentfaser nach einem der vorangehenden Ansprüche, **dadurch gekennzeichnet, dass** das Schmieröls als ein Film auf der Oberfläche jedes Filaments vorhanden ist.

10. Polymere Multifilamentfaser nach einem der vorangehenden Ansprüche, **dadurch gekennzeichnet, dass** das Schmieröl ein Weißöl aus Kohlenwasserstoffen ist.

11. Stoff, **dadurch gekennzeichnet, dass** der Stoff aus mehreren Fasern nach einem der Ansprüche 1 bis 10 hergestellt ist.

12. Verfahren zur Herstellung einer polymeren Multifilamentfaser, wobei das Material mehrere Kapillaren aufweist, wobei das Verfahren die folgenden Schritte umfasst:
Herstellen einer polymeren Kunststoffzusammensetzung, umfassend ein Gemisch aus einem Polymer, einem Copolymer oder einer Kombination davon aus Propylen und einem Wachs;
Bilden der Zusammensetzung zu zwei oder mehr Filamente;
Schmieren einer Oberfläche der Filamente mit einem Schmieröl; und
Bilden der Filamente zu einer Multifilamentfaser,
**dadurch gekennzeichnet, dass** die polymere Kunststoffzusammensetzung Wachs in einer Menge zwischen 0,5 und 5 Gewichtsprozent der Zusammensetzung enthält und das Schmieröl der Oberfläche der Filamente in einer Menge zwischen 0,5 und 5 Volumenprozent der Filamente zugesetzt wird, so dass die Kombination des Wachses und des Schmieröls im Wesentlichen verhindert, dass die Faser Feuchtigkeit durch Kapillarwirkung absorbiert.

13. Verfahren nach Anspruch 12, **dadurch gekennzeichnet, dass** das Wachs der Zusammensetzung in einer Menge von etwa 2 Volumenprozent der Zusammensetzung zugesetzt wird.

14. Verfahren nach Anspruch 12 oder 13, **dadurch gekennzeichnet, dass** das Schmiermittel in einer Menge von etwa 2 Volumenprozent der Filamente aufgetragen wird.

15. Verfahren nach einem der Ansprüche 12 bis 14, **dadurch gekennzeichnet, dass** das Bilden der Zusammensetzung zu einem Material das Wandernlassen des Wachses zu der Oberfläche der Filamente umfasst.

16. Verfahren nach Anspruch 15, **dadurch gekennzeichnet, dass** das Wachs diskontinuierlich über die Oberfläche der Filamente verteilt ist.

17. Verfahren nach einem der Ansprüche 12 bis 16, **dadurch gekennzeichnet, dass** das Wachs in Kügelchen über die Oberfläche der Filamente verteilt ist.

18. Verfahren nach einem der Ansprüche 12 bis 17, **dadurch gekennzeichnet, dass** die Filamente durch Extrusion der Zusammensetzung gebildet werden.

19. Verfahren nach einem der Ansprüche 12 bis 18, **dadurch gekennzeichnet, dass** das Schmieren der gebildeten Filamente das Auftragen eines Weißöls aus Kohlenwasserstoffen auf eine Oberfläche des Materials umfasst.

20. Verfahren nach einem der Ansprüche 12 bis 19, **dadurch gekennzeichnet, dass** das Schmieröl durch Hindurchleiten der Filamente durch Schmiermitteltröpfchen aufgetragen wird, so dass sich ein Schmiermittelfilm auf Oberflächen der Filamente bildet.

## Revendications

1. Fibre multifilament polymère formée à partir d'une multitude de filaments, la fibre ayant une pluralité de capillaires, **caractérisée en ce que** chaque fibre comprend :
une composition polymère de base constituée d'un mélange d'un polymère, d'un copolymère ou d'une combinaison de ceux-ci, de propylène et d'une cire en une quantité comprise entre 0,5 et 5 % en poids de la composition ; et
un revêtement de surface en un lubrifiant huileux en une quantité comprise entre 0,5 et 5 % en volume des filaments,
dans laquelle la combinaison de la cire et du lubrifiant huileux empêche pratiquement la fibre d'absorber l'humidité par action capillaire.

2. Fibre multifilament polymère selon la revendication 1, **caractérisée en ce que** la cire est présente en une quantité d'environ 1 % en poids de la composition.

3. Fibre multifilament polymère selon la revendication 1 ou 2, **caractérisée en ce que** le lubrifiant huileux est présent en une quantité d'environ 2 % en volume des filaments.

4. Fibre multifilament polymère selon l'une quelconque des revendications précédentes, **caractérisée en ce que** la cire se trouve à la surface de chaque filament.

5. Fibre multifilament polymère selon l'une quelconque des revendications précédentes, **caractérisée en ce que** la cire est distribuée de façon intermittente sur la surface de chaque filament.

6. Fibre multifilament polymère selon l'une quelconque des revendications précédentes, **caractérisée en ce que** la cire est distribuée en globules sur la surface de chaque filament.

7. Fibre multifilament polymère selon l'une quelconque des revendications précédentes, **caractérisée en ce que** la cire est un composé hydrocarboné ou un mélange choisi parmi un ou plusieurs des hydrocarbures de la gamme de Fischer-Tropsch.

8. Fibre multifilament polymère selon l'une quelconque des revendications précédentes, **caractérisée en ce que** la cire est Ad Sperse 868.

9. Fibre multifilament polymère selon l'une quelconque des revendications précédentes, **caractérisée en ce que** le lubrifiant huileux est présent sous la forme d'un film sur la surface de chaque filament.

10. Fibre multifilament polymère selon l'une quelconque des revendications précédentes, **caractérisée en ce que** le lubrifiant huileux est une huile blanche hydrocarbonée.

11. Etoffe **caractérisée en ce qu'**elle est fabriquée à partir d'une multitude de fibres telles que revendiquées dans les revendications 1 à 10.

12. Procédé de fabrication d'une fibre multifilament polymère, le matériau ayant une pluralité de capillaires, le procédé comprenant les étapes consistant à :
préparer une composition plastique polymère comprenant un mélange d'un polymère, d'un copolymère ou d'une combinaison de ceux-ci, de propylène et d'une cire ;
mettre la composition sous la forme de deux filaments ou plus ;
lubrifier la surface des filaments avec un lubrifiant huileux ; et
mettre les filaments sous la forme d'une fibre multifilament,
**caractérisé en ce que** la composition plastique polymère contient la cire en une quantité comprise entre 0,5 et 5 % en poids de la composition, et le lubrifiant huileux est ajouté à la surface des filaments en une quantité comprise entre 0,5 et 5 % en volume des filaments de façon à ce que la combinaison de la cire et du lubrifiant huileux empêche pratiquement la fibre d'absorber l'humidité par action capillaire.

13. Procédé selon la revendication 12, **caractérisé en ce que** la cire est ajoutée à la composition en une quantité d'environ 2 % en volume de la composition.

14. Procédé selon la revendication 12 ou 13, **caractérisé en ce que** le lubrifiant est appliqué en une quantité d'environ 2 % en volume des filaments.

15. Procédé selon l'une quelconque des revendications 12 à 14, **caractérisé en ce que** la mise de la composition sous la forme d'un matériau comprend le fait de laisser la cire migrer vers la surface des filaments.

16. Procédé selon la revendication 15, **caractérisé en ce que** la cire est distribuée de façon intermittente sur la surface des filaments.

17. Procédé selon l'une quelconque des revendications 12 à 16, **caractérisé en ce que** la cire est distribuée en globules sur la surface des filaments.

18. Procédé selon l'une quelconque des revendications 12 à 17, **caractérisé en ce que** les filaments sont formés par extrusion de la composition.

19. Procédé selon l'une quelconque des revendications 12 à 18, **caractérisé en ce que** la lubrification des filaments formés comprend l'application d'une huile blanche hydrocarbonée à la surface du matériau.

20. Procédé selon l'une quelconque des revendications 12 à 19, **caractérisé en ce que** le lubrifiant huileux est appliqué par passage des filaments à travers des gouttes de lubrifiant de façon que soit formé un film de lubrifiant sur les surfaces des filaments.
